# EUROPEAN PATENT SPECIFICATION

(11) **EP 0 616 202 B1**
(45) Date of publication and mention of the grant of the patent: **29.10.1997**
(21) Application number: 94850038.4
(22) Date of filing: 16.03.1994
(51) Int. Cl.: G01L 5/00

(54) **Method and equipment for the transfer of a measurement signal from a revolving roll used in the making of paper**
Verfahren und Einrichtung zur Messwertübertragung von einer sich dreherten Walze bei der Papierherstellung
Méthode et dispositif pour la transmission de signaux de mesure d'un rouleau tournant utilisé dans la production du papier

(30) Priority: 17.03.1993 FI 931192
(43) Date of publication of application: 21.09.1994
(73) Proprietor: VALMET CORPORATION, 00620 Helsinki (FI)
(72) Inventor: Allonen, Harri, SF-40520 Jyväskylä (FI)
(74) Representative: Perklev, Karin Cecilia

(56) References cited:
- EP-A- 0 406 627
- WO-A-91/13337
- GB-A- 2 129 138
- US-A- 4 031 513

## Description

The invention concerns a method for the transfer of a measurement signal from a revolving roll used in the making of paper, in which method detectors are employed, which have been arranged over a certain width in the transverse direction of the roll, preferably as uniformly spaced, the measurement signals received from said detectors being passed to a unit for reading and measurement of the detectors, which unit is installed preferably at the end of the roll and from which unit the signals are transmitted wirelessly further as telemeter signals to a reading unit, which is placed outside the roll and which is connected to a PC or to an equivalent computer.

Further, the invention concerns an equipment for the transfer of a measurement signal from a revolving roll used in the making of paper, which equipment comprises detectors arranged in connection with the roll, over a certain width in the transverse direction of the roll, preferably as uniformly spaced, a unit for reading and measurement of the detectors, which is preferably installed at the end of the roll and to which unit the signals received from the measurement detectors can be passed, a reading unit placed outside the roll, the unit for reading and measurement of the detectors being arranged to transfer the measurement signals to said outside reading unit as telemeter signals, as well as a PC or an equivalent computer connected to the reading unit.

In a number of different stages in the manufacture of paper, various nips are used, through which the paper web is passed. Examples of such nips include the roll nips and the so-called extended nips in the dewatering presses in a paper machine, calendering nips, and the nips in paper reels. For example, the transverse distribution of the nip pressure in a dewatering press, i.e. the distribution of the nip pressure in the axial direction of the nip rolls, affects the transverse moisture profile of the web that is pressed.

As is known from the prior art, as the press rolls, it is possible to use adjustable-crown rolls or variable-crown rolls (so-called Küsters rolls), in which the transverse distribution of the linear load in the press nip can be controlled by means of hydraulic loading members or by means of a chamber or a series of chambers pressurized by means of hydraulic fluid, respectively. The hydraulic loading members that are used in adjustable-crown rolls are, as a rule, regulated on the basis of regulation signals given by moisture and/or grammage detectors. However, in view of overall control and regulation of the process, it would also be extremely important to know the factual values and distributions of the nip pressure both in the transverse direction and in the machine direction. A further piece of information that is important in view of the control of the nip process is the width of the nip in the running direction of the web, i.e. in the machine direction, on whose basis it is possible to optimize the pressing process. This information is also a significant factor in the regulation of the calender and reel nips. As an exemplifying embodiment of a system of regulation of press nips, reference is made to the applicant's FI Patent No. 76,872 (equivalent to US Pat. No. 4,791,863) of earlier date, a measurement system similar to the present invention being usable, for example, in an environment of the sort described in said patent.

Recently, various so-called extended-nip presses based on press shoes and/or on press bands have been introduced, in which the width of the press zone in the machine direction is substantially larger than in roll nips proper. Also in extended-nip presses, the distribution of the nip pressure in the shoe and/or band nips both in the machine direction and in the transverse direction is an important parameter in view of the control of the pressing process. As an example in respect of said extended-nip presses, reference is made to the applicant's FI Patent No. 82,092 (equivalent to US Pat. No. 5,043,046) of earlier date.

In the prior art, various drum reels are known, in which, besides the reel drums, belt-support units have also been used. In view of reeling of a paper web, it is also important to know the values of the nip pressure and its distributions both in the machine direction and in the transverse direction. As some examples of the reels that have been developed by the applicant, in connection with which it is possible to use the method and the device of the present invention, reference is made to the applicant's FI Patents Nos. 81,768 and 81,770 (equivalent to US Pats. Nos. 4,921,183 and 4,883,233) of earlier date.

By means of the prior-art methods and devices, during production operation, it has been practically almost impossible to measure the distribution of the nip force both in the machine direction and in the transverse direction, which distribution is important in view of the regulation and control of the papermaking process. Measurement of the nip forces from a revolving roll has been carried out under laboratory conditions, in which respect reference is made to the paper in the journal *Paperi ja Puu - Paper and Timber 73 (1991): 5, by J. Koriseva, T. Kiema and M. Tervonen: "Soft Calender Nip: an Interesting Subject for Research and Measurement".* In the method described in said paper, a number of detectors have been installed on the roll, each of which detectors requires a telemetric equipment of its own and amplifiers of its own. Since the weight of the measurement system mainly consists of the weight of the telemetric equipment (about 1 kilogram per channel), this, together with the high cost, sets a limit on the number of measurement channels and detectors in a roll of a factual paper machine or a paper finishing machine. Moreover, owing to the limited space, it is very difficult to install a number of telemetric equipments on a revolving roll in a paper machine or finishing machine without changes in construction.

With respect to the prior art related to the present invention, reference is made further to the published international pat. appl. No. WO91/13337 (Beloit Corp.).

In the prior-art methods and devices for measurement of nip forces, problems have also been encountered in the calibration of the detectors and in the transfer of the signal from a revolving roll. In the way known in the prior art, for the transfer of the signal, glide rings and similar arrangements have been used, and also telemetric equipments, which are, however, complicated and susceptible of interference.

In view of elimination of the drawbacks described above, in the applicant's FI Pat. Appl. No. 914829 (Published Pat. Appl. No. 86,771) of earlier date, such a method and device closely related to the present invention are described in which the measurement signals received from the different detectors are passed to a switching unit, whose connectors are controlled, based on the rotation of the roll or equivalent, by means of a pulse generator or equivalent so that, through the switching unit, the signal of each measurement detector is alternatingly connected to a telemeter transmitter placed in connection with the revolving roll or equivalent, and by means of said telemeter transmitter, the series of measurement signals are transmitted wirelessly to a stationary telemeter receiver placed outside the revolving roll or equivalent.

The object of the invention involved in said FI Pat. Appl. No. 914829 has been to provide a method and a device for measurement of the nip forces and nip pressures and of the distribution of same in roll and/or band nips that are used in the manufacture of paper so that the drawbacks discussed above can be substantially avoided, said method and device of measurement being suitable for on-line measurement of nip forces and/or nip pressures during production operation, and in which method and device the transfer of signals from the revolving roll is solved in a simpler and more economical way so that the method is suitable for an environment of paper manufacture, which environment is quite demanding in this respect, and in which method and device the problems related to the placing of the detectors on a nip roll and/or on a nip band are solved.

Even though the prior-art solution described above has proved quite good and operable in comparison with earlier systems, some unsolved problems have, however, remained in it. One problem has consisted of the high frequencies employed in the transfer of signals. Owing to the high frequencies, the signal transfer distance may have been quite long, but the long transfer distance has again resulted in quite a high susceptibility of interference. In the earlier telemeter systems, the signal to be transmitted was already converted to digital form at the roll-side end, the signal being then transferred in said digital form (compare the applicant's FI Pat. Appl. No. 924138 of earlier date). Such a system has required quite a high number of complex electronic components, which have hade to be fitted on the roll. This has again had the consequence that the construction of the equipment has been of large size and high weight, frequently even a few hundred grams, for which reason the roll has had to be balanced separately for this purpose. Further, the systems of earlier dates have involved the problem related to the calibration of the measurement detectors. In the earlier systems, *viz.,* the computer connected with the system, such as a PC or equivalent, had to include quite an extensive and complex calibration program, in most cases tailored for the specific case, in order that it should have been possible to calibrate the detectors. Such tailoring of a program also constitutes quite an important cost factor.

The primary object of the present invention is to provide a method and an equipment more advanced than the methods and devices described in the applicant's said FI patent applications of earlier dates (Nos. 914829 and 924138), so that, compared with said earlier solutions, the method and the equipment of the present invention are simpler, easier to operate, more reliable in operation, and more versatile. In particular in respect of the electronics, in the present invention, attempts have been made to provide an embodiment that is simpler and also involves lower costs in comparison with the earlier solutions.

It is a further object of the invention to provide a measurement system that can be controlled in a simple way during operation of the machine from outside the revolving roll so that, if necessary, measurement data and calibration data can be supplied to the measurement system from outside the roll and that measurement data can be transferred from the roll wirelessly to the outside system, so that it is favourably possible to feed the measurement data into the regulation system of the roll so that, in some cases, a closed regulation circuit can be formed.

In view of achieving the objectives stated above and those that will come out later, the method in accordance with the invention is mainly characterized in that, in the unit for reading and measurement of the detectors, a transponder in itself known is used, into which a code of its own is coded for each detector, that the signals are processed in the whole measurement process as analog signals, and that, in the transfer of the telemeter signals between the unit for reading and measurement of the detectors and the reading unit placed outside the roll, a substantially low transfer frequency of an order of 100...150 kHz is employed.

On the other hand, the device in accordance with the invention is mainly characterized in that the equipment comprises a transponder in itself known, which transponder can be coded and which transponder is fitted in the unit for reading and measurement of the detectors and is arranged to process the signals received from the measurement detectors as analog signals and in pulse form, and that the frequency of transfer of the telemeter signals between the unit for reading and measurement of the detectors and the reading unit placed outside the roll has been arranged substantially low, being of an order of 100...150 kHz.

By means of the present invention, compared with the prior-art solutions, a number of advantages are obtained, of which the following should be stated in this connection. Compared with the prior art, the components included in the system of the present invention are of very small size and low weight, so that they can also be fitted easily at the roll-side end without having to balance the roll on their account. The power requirement of the system is very little. The supply of current can be accomplished by means of a very little battery, because the system is not active all the time. The system is not activated until a separate command for this purpose is given from the receiving end. The measurement signal is transferred in the system in accordance with the invention as analog and at a very low frequency (the transfer frequency is of an order of 100...150 kHz, preferably 130 kHz). The signal to be transferred is FSK-modulated (FSK = Frequency Shift Keying), in which case the transfer of the signal takes place as an analog signal and in pulse form. By means of this arrangement, the transfer of information can be made as free of interference as possible. When the signal has been converted to pulse form, any interference can be filtered off easily, in which case it is possible to read the main frequency alone.

In the system, at the roll-side end, a transponder is used, one of whose advantages over the earlier systems is the ease of calibration of the detectors. This is based on the fact that in the transponder it is possible to code a code of its own for each detector, with which code it is then simple to compare the calibration of each detector. The possibility of coding also simplifies and facilitates the use of the system, for by the intermediate of the computer, such as a PC or equivalent, connected with the system, through the read/write unit of the transponder, it is possible to give the transponder a command to read a detector of a certain code alone. As the detectors in the system, it is possible to use PVDF-type film detectors or, for example, strain gauges or equivalent. The further advantages and characteristic features of the invention will come out from the following detailed description of the invention.

In the following, the invention will be described in detail with reference to the figures in the accompanying drawing, which illustrate some exemplifying embodiments of the invention, the invention being, however, not confined to the details of said embodiments alone.

Figure 1 is a fully schematic side view of a press nip to which the method and the equipment in accordance with the invention can be applied.

Figure 2 is a schematic illustration of the distribution of the compression pressure in a press nip as shown in Fig. 1 in the machine direction.

Figure 3 is a schematic illustration of the distribution of the compression pressure in the transverse direction in a press nip as shown in Fig. 1.

Figure 4 is a schematic illustration of a measurement arrangement in accordance with the invention as applied, e.g., to a nip roll in the press nip shown in Fig. 1.

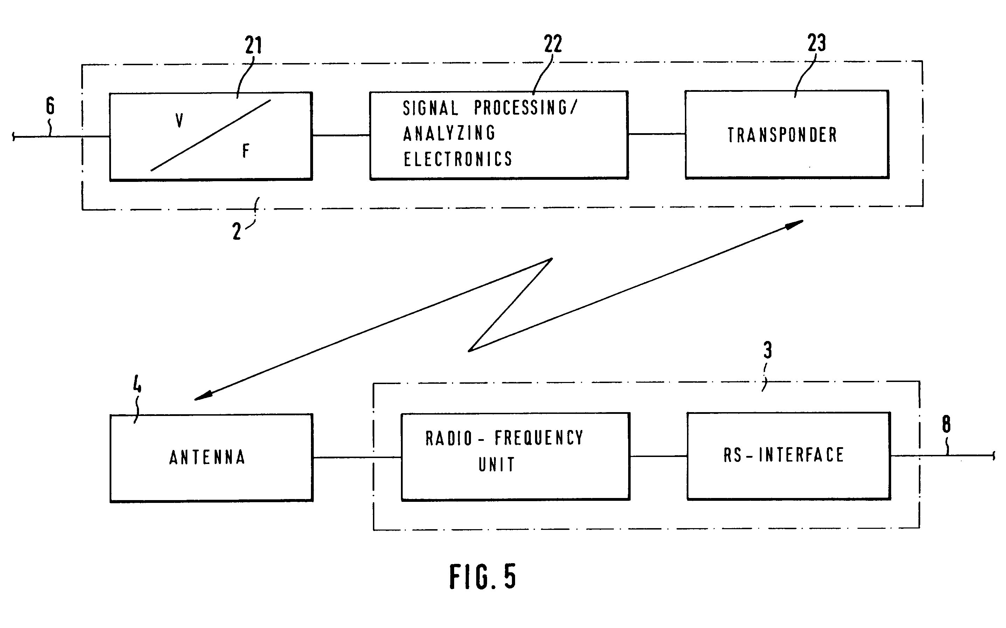

Figure 5 is a schematic block-diagram illustration of the transfer of a measurement signal in the method in accordance with the invention.

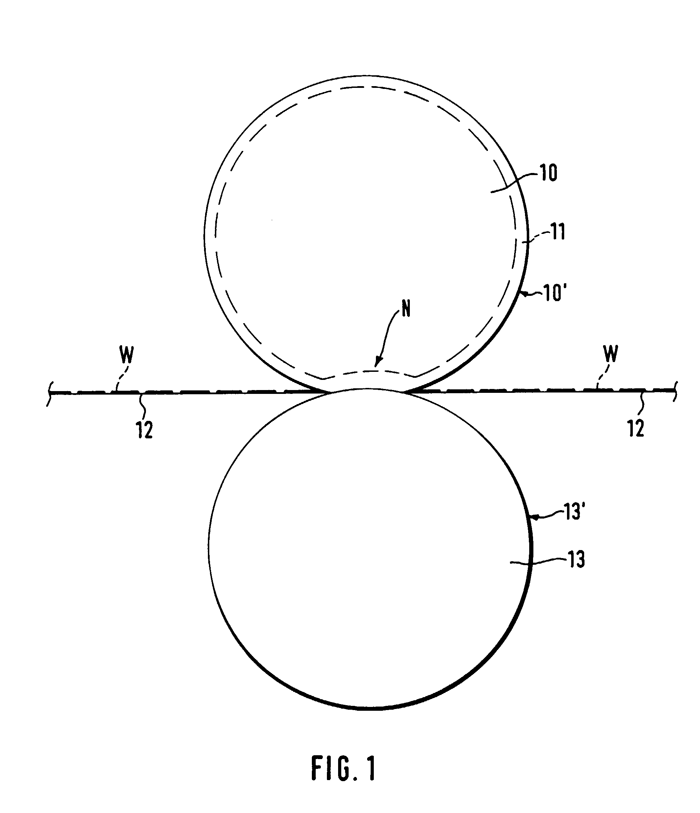

Fig. 1 is a schematic side view of a press nip N in a dewatering press of a paper machine, which nip is formed between the rolls 10 and 13. In the press nip N, water is removed out of the web W, which is passed into the nip N on support of the press felt 12. The upper roll 10 in the dewatering press is provided with an elastic coating 11, which has a smooth outer face 10'. Onto the lower roll 13 in the dewatering nip, a hollow face 13' has been formed, into which water can be removed out of the press felt 12.

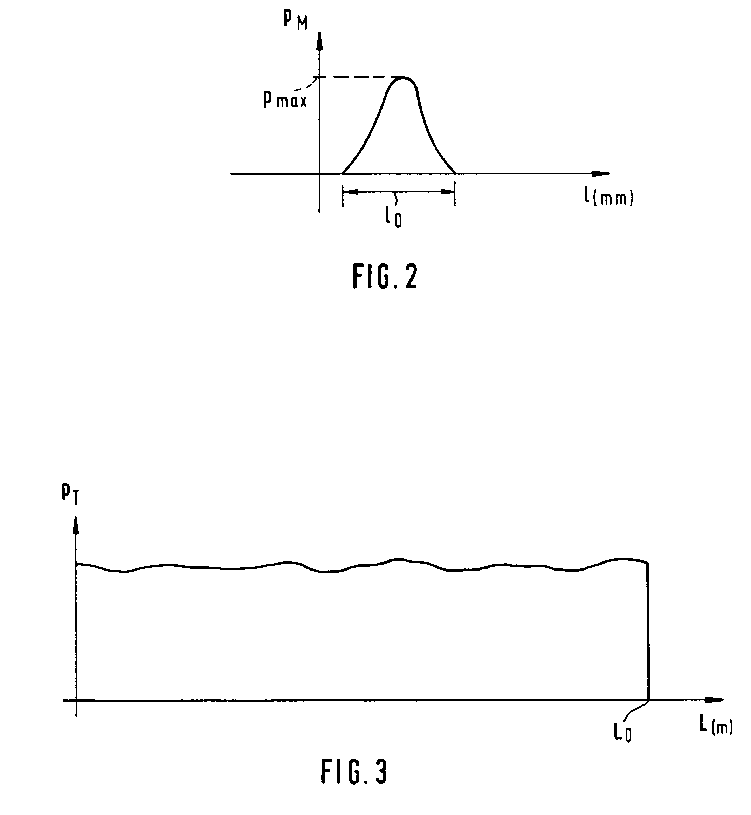

Fig. 2 is a schematic illustration of the distribution of the compression pressure p_{M} in the press nip N in the machine direction 1. The maximum value of the compression pressure p_{M} is denoted with the reference pₘₐₓ. The nip N as shown in Fig. 1 may also represent a calendering nip, in which case a press felt 12 is, of course, not used and in which case, e.g., the roll 13 is a hard-faced roll and the roll 10 is a calendering roll provided with a soft coating, such as a polyurethane coating 11, so that the nip N is a so-called soft calendering nip.

In Fig. 3, attempts have been made to illustrate the distribution of the compression pressure p_{T} in the nip N in the transverse direction, i.e. in the axial direction of the rolls 10 and 13, schematically. The transverse width of the paper web W and of the nip N is denoted with the reference L₀.

The transverse distribution of the compression pressure p_{T} affects the dry solids content of the web in dewatering nips, the caliper and smoothness of the web in calendering nips, and the uniformity and the hardness profile of the reel in reeling nips. These are important process quantities, so that the distributions p_{M} and p_{T} of the nip forces and nip pressures are parameters important for the regulation and control of the papermaking process.

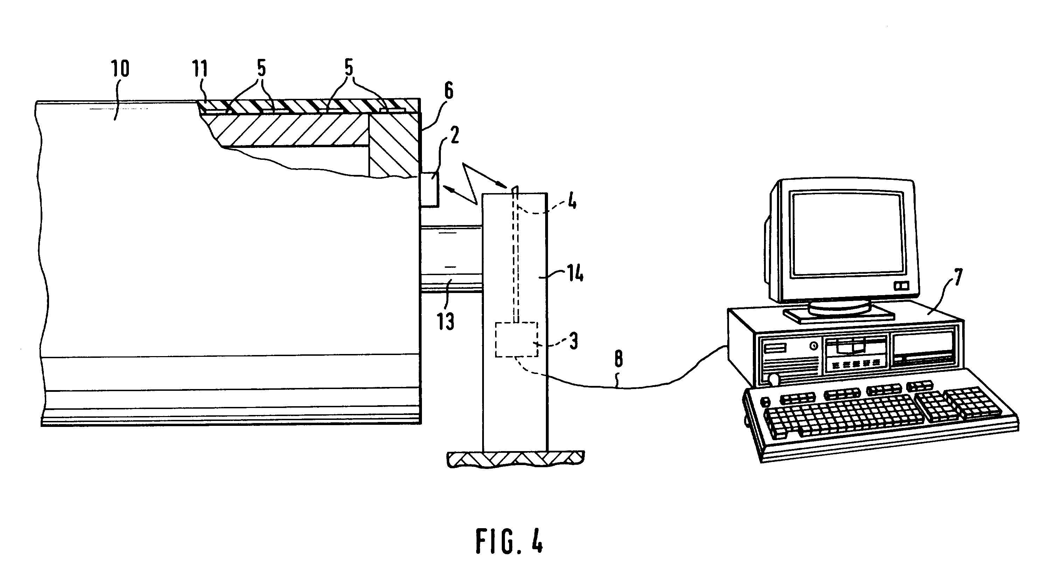

Fig. 4 is a fully schematic illustration of the main principles of the measurement arrangement in accordance with the invention as applied to one of the rolls 10 that form the press nip, which roll is provided with an elastic coating 11, e.g., of polyurethane. Inside the coating 11, a number of measurement detectors 5 are fitted, which are preferably arranged as uniformly spaced in the axial direction of the roll. By means of such a series of detectors 5, it is possible to measure both the distribution p_{M} of the nip pressure in the machine direction and the transverse distribution p_{T} of the nip pressure, the transverse nip pressure being measured at the points corresponding to the number of the detectors 5 in the transverse direction. The detectors 5 may be attached either directly to the roll 10 body or be inlaid into the coating 11, e.g., between different layers in the coating. In some particular cases, it is possible to think of fitting the detectors 5 directly on the outer face of the roll.

From the detectors 5, the measurement signals are passed along cables 6 to the unit 2 for reading and measurement of the detectors, which unit is fixed to the end of the roll near the roll axle 13. The unit 2 for reading and measurement of the detectors includes a voltage/frequency converter 21, through which the signal is transferred further to the signal processing/analyzing electronics unit 22, which is integrated in the same unit 2. In said signal processing and analyzing electronics unit 22, the signal is modulated by means of a frequency modulator to FM-modulation into so-called FSK-modulated pulse form (FSK = Frequency Shift Keying). The signal which has been converted to this form is transferred further into the transponder 23, which is integrated in the same unit 2 and which is, thus, capable of processing the FSK-modulated pulse-formed signal. The transfer of the signal is constantly analogous, and it is at no stage converted to digital form, being just converted to pulse form in the unit 2 for reading and measurement of the detectors, in which case it is easy to filter off any interference so that the main frequency can be read.

The transponder 23 is of the read/write type, so that it can both receive and transmit signals. From the transponder 23, the signal is transferred telemetrically to the transponder reading unit 3 by the intermediate of the antenna 4.

As is shown in Fig. 4, the transponder reading unit 3 is preferably attached to the frame 14 of the bearing housing of the roll 10, to whose face the antenna 4 may also be attached. In the telemetric signal transfer, a low transfer frequency is used, which is of an order of about 130 kHz. The transponder reading unit 3 includes the electronics necessary for the data transfer and, e.g., a frequency/voltage converter, by whose means the transferred signal is converted back to voltage form. The signal is converted to voltage form because the PC computer 7 can process such a voltage form. From the transponder reading unit 3 the signal is transmitted to the PC 7 along the cable 8, so that the distance from the transponder reading unit 3 to the PC 7 does not constitute a limiting factor in the system.

The transponder 23 is a commercially available component of very small size and low weight, which is manufactured and marketed, e.g., by Texas Instruments Corp. under the trade mark TIRIS. Such a transponder 23 can be coded so that therein it is possible to code a number of several digits, e.g. 20 digits, for each detector 5. In such a case, the calibration, e.g., of the detectors 5 can be carried out easily and simply, because the calibration of each detector 5 can be compared with the number coded in the transponder 23. Thus, the PC 7 does not have to contain a large and complex calibration program for the detectors 5.

The use of the system in accordance with the invention is very easy and simple, among other things, especially because of the fact that the transponder 23 can include a code of its own for each detector 5. Since both the unit 2 for reading and measurement of the detectors and the transponder reading unit 3 are of the read/write type, from the PC 7, through the transponder reading unit 3, the transponder 23 can be given a command to read exclusively the detector 5 that has a certain code. In such a case, the PC 7 may include, e.g., a program that gives the commands to read the detectors 5 in a certain sequence or at certain intervals.

The power consumption of the measurement electronics is very little, because the system is not active all the time. The system is, *viz.,* not activated until when a separate command is given for this from the signal-receiving end. Thus, the current supply can be arranged by means of a battery of very small size and low weight, which can be fixed simply to the roll end in connection with, or at the vicinity of, the unit 2 for reading and measurement of the detectors. The detectors 5 can be made favourably out of a PVDF-film (PVDF = polyvinylidenedifluoride), which is a piezoelectric film. The PVDF-film is well suitable for a power or pressure detector especially because, by means of said film, with a force of just tens of newtons an output voltage of the volt level is already obtained. As the detectors, it is indeed also possible to use, e.g., strain gauges or other, corresponding detectors of this type that are used commonly.

Besides for measurement of pressure and force, the system can also be applied, e.g., to measurement of temperature at objects at which such information is needed. Some possible objects of application are also, e.g., the headbox of a paper machine, in which the system can be used for measurement of the uniformity of the lip profile. Further, the system can be applied, e.g., to monitoring of the condition of bearings, in which case the measurement can be carried out, e.g., as measurement of the vibration level. Further, the measurement system in accordance with the invention can be arranged to collect information constantly and at certain intervals. In such a case, when desired, it would be possible to look in the PC 7 what has happened in the object to be measured within a certain period of time. In such a case, the measurement system would operate in the way of a "black box".

Above, the invention has been described by way of example with reference to the figures in the accompanying drawing. The invention is, however, not confined to the exemplifying embodiments shown in the figures alone, but different embodiments of the invention may show variation within the scope of the inventive idea defined in the accompanying claims.

## Claims

1. Method for the transfer of a measurement signal from a revolving roll used in the making of paper, in which method detectors (5) are employed, which have been arranged over a certain width in the transverse direction of the roll (10), preferably as uniformly spaced, the measurement signals received from said detectors being passed to a unit (2) for reading and measurement of the detectors, which unit is installed preferably at the end of the roll (10) and from which unit the signals are transmitted wirelessly further as telemeter signals to a reading unit (3), which is placed outside the roll (10) and which is connected to a PC (7) or to an equivalent computer, **characterized** in that, in the unit (2) for reading and measurement of the detectors, a transponder (23) in itself known is used, into which a code of its own is coded for each detector (5), that the signals are processed in the whole measurement process as analog signals, and that, in the transfer of the telemeter signals between the unit (2) for reading and measurement of the detectors and the reading unit (3) placed outside the roll (10), a substantially low transfer frequency of an order of 100...150 kHz is employed.

2. Method as claimed in claim 1, **characterized** in that the analog, telemetric signals are transferred in a pulse form, to which form they are converted in the unit (2) for reading and measurement of detectors before the transponder (23).

3. Method as claimed in claim 1 or 2, **characterized** in that the analog, telemetric signals are FSK-modulated signals.

4. Method as claimed in any of the preceding claims, **characterized** in that the measurement system is activated for measurement by means of a command given to the transponder (23) through the outside reading unit (3), whereas the system is otherwise in a passive state.

5. Method as claimed in any of the preceding claims, **characterized** in that the detector (5) codes that have been stored in the transponder (23) are used for calibration of the detectors (5) and, during measurement, for reading of the signals given by a certain detector (5).

6. Equipment for the transfer of a measurement signal from a revolving roll used in the making of paper, which equipment comprises detectors (5) arranged in connection with the roll (10), over a certain width in the transverse direction of the roll, preferably as uniformly spaced, a unit (2) for reading and measurement of the detectors, which is preferably installed at the end of the roll (10) and to which unit (2) the signals received from the measurement detectors (5) can be passed, a reading unit (3) placed outside the roll (10), the unit (2) for reading and measurement of the detectors being arranged to transfer the measurement signals to said outside reading unit (3) as telemeter signals, as well as a PC or an equivalent computer connected to the reading unit (3), **characterized** in that the equipment comprises a transponder (23) in itself known, which transponder can be coded and which transponder is fitted in the unit (2) for reading and measurement of the detectors and is arranged to process the signals received from the measurement detectors (5) as analog signals and in pulse form, and that the frequency of transfer of the telemeter signals between the unit (2) for reading and measurement of the detectors and the reading unit (3) placed outside the roll (10) has been arranged substantially low, being of an order of 100...150 kHz.

7. Equipment as claimed in claim 6, **characterized** in that, for carrying out the measurement, the equipment is arranged to be activated by means of a separate command given to the transponder (23) through the outside reading unit (3), while the system is otherwise in a passive state.

8. Equipment as claimed in claim 6 or 7, **characterized** in that, in the transponder (23), a code of its own is coded for each detector (5), said code being used for calibration of the detectors (5) and, during measurement, for identification of a certain detector (5) and for reading of the signal of the identified detector.

## Patentansprüche

1. Verfahren für den Transfer eines Meßsignals von einer sich drehenden Walze, das in der Papierherstellung verwendet wird, in welchem Verfahren Detektoren (5) angewendet werden, die über eine bestimmte Breite in der Querrichtung der Walze (10), vorzugsweise gleichmäßig beabstandet, eingerichtet worden sind, wobei die von den Detektoren empfangenen Meßsignale zu einer Einheit (2) für das Lesen und Messen der Detektoren geleitet werden, welche Einheit vorzugsweise an dem Ende der Walze (10) installiert ist und von welcher Einheit die Signale als Telemetriesignale drahtlos zu einer Leseeinheit (3) weiter übermittelt werden, die außerhalb der Walze (10) angeordnet ist und die mit einem PC (7) oder einem gleichartigen Computer verbunden ist, **dadurch gekennzeichnet, daß** in der Einheit (2) für das Lesen und Messen der Detektoren ein an sich bekannter Transponder (23) verwendet wird, in dem eine eigene Codierung für jeden Detektor (5) codiert wird, daß die Signale in dem gesamten Meßprozeß als Analogsignale verarbeitet werden und daß in dem Transfer der Telemetriesignale zwischen der Einheit (2) für das Lesen und Messen der Detektoren und der außerhalb der Walze (10) angeordneten Leseeinheit (3) eine weitgehend geringe Transferfrequenz einer Größenordnung von 100 bis 150 kHz angewendet wird.

2. Verfahren nach Anspruch 1, dadurch gekennzeichnet, daß die analogen Telemetriesignale in einer Pulsform transferiert werden, in welche Form sie in der Einheit (2) für das Lesen und Messen von Detektoren vor dem Transponder (23) umgewandelt werden.

3. Verfahren nach Anspruch 1 oder 2, dadurch gekennzeichnet, daß die analogen Telemetriesignale FSK-modulierte Signale sind.

4. Verfahren nach einem der vorangegangenen Ansprüche, dadurch gekennzeichnet, daß das Meßsystem für das Messen mittels eines Befehls aktiviert wird, der durch die außenseitige Leseeinheit (3) zu dem Transponder (23) gegeben wird, wohingegen sich das System sonst in einem passiven Zustand befindet.

5. Verfahren nach einem der vorangegangenen Ansprüche, dadurch gekennzeichnet, daß die Detektor (5) -Codierungen, die in dem Transponder (23) gespeichert worden sind, für eine Kalibrierung der Detektoren (5) und während des Messens für das Lesen der von einem bestimmten Detektor (5) gegebenen Signale verwendet werden.

6. Ausrüstung für den Transfer eines Meßsignals von einer sich drehenden Walze, die in der Papierherstellung verwendet wird, welche Ausrüstung Detektoren (5), die in Verbindung mit der Walze (10), vorzugsweise gleichmäßig beabstandet, über eine bestimmte Breite in der Querrichtung der Walze eingerichtet sind, eine vorzugsweise an dem Ende der Walze (10) installierte Einheit (2) für das Lesen und Messen der Detektoren, zu welcher Einheit (2) die von den Meßdetektoren (5) empfangenen Signale geleitet werden können, eine außerhalb der Walze (10) angeordnete Leseeinheit (3), wobei die Einheit (2) für das Lesen und Messen der Detektoren eingerichtet ist, um die Meßsignale als Telemetriesignale zu der außenseitigen Leseeinheit (3) zu transferieren, sowie einen PC oder einen gleichartigen Computer aufweist, der mit der Leseeinheit (3) verbunden ist, **dadurch gekennzeichnet, daß** die Ausrüstung einen an sich bekannten Transponder (23) aufweist, welcher Transponder codiert werden kann und welcher Transponder in der Einheit (2) für das Lesen und Messen der Detektoren eingebaut ist und eingerichtet ist, um die von den Meßdetektoren (5) als Analogsignale und in Pulsform empfangenen Signale zu verarbeiten, und daß die Transferfrequenz der Telemetriesignale zwischen der Einheit (2) für das Lesen und Messen der Detektoren und der außerhalb der Walze (10) angeordneten Leseeinheit (3) weitgehend gering in einer Größenordnung von 100 bis 150 kHz eingerichtet worden ist.

7. Ausrüstung nach Anspruch 6, dadurch gekennzeichnet, daß für das Durchführen der Messung die Ausrüstung eingerichtet ist, um mit Hilfe eines separaten Befehls aktiviert zu werden, der durch die außenseitige Leseeinheit (3) zu dem Transponder (23) gegeben wird, während sich das System sonst in einem passiven Zustand befindet.

8. Ausrüstung nach Anspruch 6 oder 7, dadurch gekennzeichnet, daß in dem Transponder (23) eine eigene Codierung für jeden Detektor (5) codiert ist, wobei die Codierung für eine Kalibrierung der Detektoren (5) und während der Messung für das Identifizieren eines bestimmten Detektors (5) und für das Lesen des Signals des identifizierten Detektors verwendet wird.

## Revendications

1. Procédé pour la transmission de signaux de mesure à partir d'un rouleau tournant, utilisé dans la fabrication du papier, procédé dans lequel on utilise des détecteurs (5) qui ont été disposés sur une certaine largeur dans la direction transversale du rouleau (10), de préférence espacés uniformément, les signaux de mesure provenant des détecteurs étant amenés à une unité (2) pour la lecture et la mesure des détecteurs, laquelle unité est installée de préférence à l'extrémité du rouleau (10), et unité à partir de laquelle les signaux sont retransmis sans fil comme signaux télémétriques à une unité de lecture (3) qui est située à l'extérieur du rouleau (10) et qui est raccordée à un PC (7) ou à un ordinateur équivalent, caractérisé en ce que dans l'unité (2) pour la lecture et la mesure des détecteurs, on utilise un transpondeur (23) connu per se, dans lequel est codé un code spécifique pour chaque détecteur (5), en ce que les signaux sont traités dans la totalité du procédé de mesure comme signaux analogiques et en ce que dans la transmission des signaux télémétriques entre l'unité (2) pour la lecture et la mesure des détecteurs et l'unité de lecture (3) située à l'extérieur du rouleau (10), on utilise une fréquence de transmission sensiblement basse, de l'ordre de 100 ... 150 kHz.

2. Procédé selon la revendication 1, caractérisé en ce que les signaux analogiques télémétriques sont transmis sous forme d'impulsions, forme sous laquelle ils sont convertis dans l'unité (2) pour la lecture et la mesure des détecteurs avant le transpondeur (23).

3. Procédé selon la revendication 1 ou 2, caractérisé en ce que les signaux analogiques télémétriques sont des signaux modulés par déplacement de fréquence ou FSK.

4. Procédé selon l'une quelconque des revendications précédentes, caractérisé en ce que le système de mesure est activé pour la mesure au moyen d'une commande donnée au transpondeur (23) par l'unité de lecture extérieure (3) tandis que le système se trouve sinon à l'état passif.

5. Procédé selon l'une quelconque des revendications précédentes, caractérisé en ce que les codes du détecteur (5) qui ont été stockés dans le transpondeur (23) servent à l'étalonnage des détecteurs (5) et, pendant la mesure, à la lecture des signaux donnés par un certain détecteur (5).

6. Dispositif pour la transmission de signaux de mesure à partir d'un rouleau tournant, utilisé dans la fabrication du papier, lequel dispositif comprend des détecteurs (5) disposés en liaison avec le rouleau (10) sur une certaine largeur dans la direction transversale du rouleau, de préférence espacés uniformément, une unité (2) pour la lecture et la mesure des détecteurs qui est de préférence montée à l'extrémité du rouleau (10), et unité (2) à laquelle peuvent être transmis les signaux reçus en provenance des détecteurs de mesure (5), une unité de lecture (3) placée à l'extérieur du rouleau (10), l'unité (2) pour la lecture et la mesure des détecteurs étant apte à transférer les signaux de mesure vers l'unité de lecture extérieure (3) comme signaux télémétriques ainsi qu'un PC ou ordinateur équivalent connecté à l'unité de lecture (3), caractérisé en ce que le dispositif comprend un transpondeur (23) connu per se, lequel transpondeur peut être codé et transpondeur qui est fixé dans l'unité (2) pour la lecture et la mesure des détecteurs et qui est apte à traiter les signaux reçus en provenance des détecteurs de mesure (5) en tant que signaux analogiques et sous forme d'impulsions, et en ce que la fréquence de transfert des signaux télémétriques entre l'unité (2) pour la lecture et la mesure des détecteurs et l'unité de lecture (3) placée à l'extérieur du rouleau (10) est sensiblement basse, de l'ordre de 100 ... 150 kHz.

7. Dispositif selon la revendication 6, caractérisé en ce que pour effectuer la mesure, le dispositif peut être activé par une commande séparée donnée au transpondeur (23) par l'unité de lecture extérieure (3) tandis que le système se trouve sinon à l'état passif.

8. Dispositif selon la revendication 6 ou 7, caractérisé en ce que dans le transpondeur (23), un code spécifique est codé pour chaque détecteur (5), ce code servant à l'étalonnage des détecteurs (5) et, pendant la mesure, à l'identification d'un certain détecteur (5) et à la lecture du signal du détecteur identifié.
